# FASCICULE DE BREVET EUROPEEN

(11) **EP 3 900 204 B1**
(45) Date de publication et mention de la délivrance du brevet: **28.02.2024**
(21) Numéro de dépôt: 19842830.2
(22) Date de dépôt: 17.12.2019
(51) Int. Cl.: H04B 7/026, H04B 7/14, H04W 84/00, H04W 88/00

(54) **DISPOSITIF RÉPÉTEUR ET SYSTÈME D'EXTENSION DE COUVERTURE D'UN POINT D'ACCÈS WI-FI**
VERSTÄRKUNGSVORRICHTUNG UND SYSTEM ZUR ERWEITERUNG DER ABDECKUNG EINES WI-FI-ZUGANGSPUNKTES
REPEATING DEVICE AND SYSTEM FOR EXTENDING THE COVERAGE OF A WI-FI ACCESS POINT

(30) Priorité: 21.12.2018 FR 1873739
(43) Date de publication de la demande: 27.10.2021
(73) Titulaire: Orange, 92130 Issy-les-Moulineaux (FR)
(72) Inventeur: GUILLET, Valéry, 92326 CHÂTILLON CEDEX (FR); LUCAS, Philippe, 92326 CHÂTILLON CEDEX (FR); ZOUAOUI, Rida, 92326 CHÂTILLON CEDEX (FR)
(74) Mandataire: Vidon Brevets & Stratégie
(86) Numéro de dépôt international: PCT/FR2019/053119
(87) Numéro de publication internationale: WO 2020/128301

(56) Documents cités:
- EP-A1- 2 387 264
- WO-A2-2004/045125
- GB-A- 2 521 187
- US-A1- 2008 175 212
- US-A1- 2008 267 142

## Description

### 1. Domaine de l'invention

L'invention concerne un équipement visant à augmenter la couverture Wi-Fi d'un point d'accès Wi-Fi.

### 2. Art Antérieur

Les problèmes de performances de couverture Wi-Fi constituent l'une des principales plaintes d'abonnés à un service Internet résidentiel ou entreprises (PME pour Petites et Moyennes Entreprises). De tels problèmes ont des origines diverses telles que notamment la présence d'interférences ou l'absence d'un niveau de signal Wi-Fi reçu suffisant par exemple lorsque le point d'accès Wi-Fi (typiquement une passerelle résidentielle), est trop loin ou lorsque des obstacles sont présents tels que des murs trop épais, ou des équipements parasitant le signal Wi-Fi.

Afin d'augmenter la couverture Wi-Fi d'un point d'accès Wi-Fi, il est possible de placer des dispositifs appelés « extendeurs Wi-Fi » dans l'environnement à couvrir, par exemple à un emplacement où le signal Wi-Fi du point d'accès est nul.

De tels « extendeurs Wi-Fi » fonctionnent de manière similaire au principal point d'accès Wi-Fi de l'environnement. Un terminal qui souhaite avoir une connexion Wi-Fi doit sélectionner un point d'accès Wi-Fi parmi les points d'accès disponibles, passerelle résidentielle ou « extendeurs Wi-Fi », et s'associer avec ce point d'accès. Or, la gestion de plusieurs points d'accès Wi-Fi auxquels s'associer n'est pas forcément bien prise en charge par les terminaux clients.

De plus, l'utilisation de tels « extendeurs Wi-Fi » peut s'avérer fastidieuse, car ils nécessitent la mise en oeuvre de mécanismes complexes de "handover" (basculement) entre deux points d'accès Wi-Fi, par exemple lorsque le terminal est déplacé dans l'environnement, pour forcer le terminal Wi-Fi à sélectionner le point d'accès fournissant le meilleur signal Wi-Fi, car un terminal Wi-Fi ne peut communiquer qu'avec un seul point d'accès Wi-Fi à un instant donné. Ces mécanismes de basculement ne sont pas toujours correctement pris en charge par les terminaux clients Wi-Fi.

La demande internationale WO 2004/045125 présente un système de réseau sans-fil domestique dans lequel un module diviseur est situé entre un point d'accès et son antenne, de sorte à coupler une partie du signal destiné à l'antenne (sans par ailleurs coupler les signaux de contrôle afférant à ce signal à émettre) directement vers une extension filaire elle-même connectée à un module d'extension chargé d'émettre cette partie de signal, à distance du point d'accès.

Cependant, du fait des caractéristiques spectrales du signal qu'il est amené à émettre, ce système nécessite l'utilisation spécifique d'une extension filaire de type câble coaxial afin de pouvoir transporter le signal radio en l'état, au moyen d'une transmission sous forme analogique de type « radio sur câble ». En particulier, si le point d'accès émet un signal à une fréquence de 5 GHz, le signal transmis sur le câble sera également à cette fréquence 5 GHz, nécessitant un câble coaxial ayant la bande passante nécessaire pour transporter un tel type de signal radio. Ce système nécessite donc soit la présence d'un câble coaxial préexistant, soit la pose d'un nouveau câble coaxial, pour connecter le module d'extension au point d'accès, ce qui est contraignant et peut s'avérer coûteux.

De plus, ce système de l'art antérieur ne vise que le seul cas de l'extension de couverture d'un point d'accès mono-antenne et est difficilement transposable à un point d'accès multi-antennes (i.e. de type MIMO) puisqu'une telle transposition impliquerait de relier avec un câble coaxial dédié chaque antenne du point d'accès multi-antennes à chaque antenne d'un module d'extension multi-antennes.

La demande GB 2 521 187 A divulgue un routeur Wi-Fi connecté à câble coaxial via un module d'extension. Les signaux Wi-Fi reçus par le module d'extension sont transmis le long du câble jusqu'à une antenne distante qui réémet le signal reçu en Wi-Fi.

La demande EP 2 387 264 Al présente un réseau de transmission Wi-Fi dans lequel on transmet d'information de configuration d'un point d'accès à un dispositif d'extension de couverture à travers d'un câble coaxial.

La demande US 2008/0175212 A1 décrit de commander à distance, par un point d'accès de réseau sans fil et via un câble coaxial, les amplificateurs de transmission et de réception d'un circuit d'antenne.

La demande US 2008/267142 A1 divulgue d'échanger des signaux entre une unité centrale et plusieurs unités d'antennes distantes, l'unité centrale étant configurée pour former des faisceaux afin de rendre service à plusieurs stations mobiles à travers lesdites unités d'antenne qui sont distribuées sur une zone de service.

### 3. Exposé de l'invention

L'invention vient améliorer l'état de la technique.

Elle propose, à cet effet un dispositif répéteur de signal Wi-Fi comprenant:
des moyens de réception, via une connexion filaire connectée à un dispositif d'extension d'un point d'accès Wi-Fi, d'un signal numérique résultant de la conversion analogique-numérique d'un signal analogique issu d'une division en puissance d'un signal destiné à être émis par ledit point d'accès Wi-Fi autour d'une fréquence porteuse prédéterminée afin de délivrer un premier signal Wi-Fi ;
des moyens de conversion numérique-analogique configurés pour convertir le signal numérique reçu via ladite connexion filaire en un signal analogique ; et
des moyens de retransmission radio configurés pour émettre le signal analogique fourni par les moyens de conversion numérique-analogique autour de ladite fréquence porteuse prédéterminée, afin de délivrer un deuxième signal Wi-Fi sensiblement identique au premier signal Wi-Fi.

Corrélativement l'invention concerne également un système d'extension de couverture d'un point d'accès Wi-Fi, comprenant un dispositif d'extension et au moins un dispositif répéteur tel que ci-avant, ledit dispositif d'extension comprenant des moyens de conversion analogique-numérique configurés pour convertir en un signal numérique un signal analogique issu d'une division en puissance d'un signal à émettre par ledit point d'accès Wi-Fi autour d'une fréquence porteuse prédéterminée afin de délivrer un premier signal Wi-Fi, et des moyens de transmission dudit signal numérique audit au moins un dispositif répéteur via une connexion filaire,
ledit au moins un dispositif répéteur étant configuré pour émettre un signal analogique, résultant d'une conversion numérique-analogique du signal numérique reçu en provenance du dispositif d'extension, autour de ladite fréquence porteuse prédéterminée, afin de délivrer un deuxième signal Wi-Fi sensiblement identique audit premier signal Wi-Fi.

Selon l'invention, un dispositif répéteur d'un signal Wi-Fi et un système d'extension de couverture Wi-Fi sont proposés. Un tel système comprend le dispositif répéteur de signal Wi-Fi émis par un point d'accès Wi-Fi et au moins un dispositif d'extension de ce point d'accès Wi-Fi, pouvant être compris dans ce point d'accès Wi-Fi.

Ces dispositifs permettent d'étendre la couverture Wi-Fi d'un point d'accès Wi-Fi sans présenter les inconvénients de l'art antérieur, en particulier en répétant à l'identique le signal Wi-Fi émis par le point d'accès Wi-Fi, de manière légèrement décalée dans le temps, sans être limité à l'utilisation d'un câble coaxial entre le point d'accès Wi-Fi et le dispositif d'extension.

Du point de vue d'un terminal client Wi-Fi, celui-ci reçoit la combinaison des deux signaux Wi-Fi: le premier signal Wi-Fi émis par le point d'accès Wi-Fi et le deuxième signal Wi-Fi émis par le dispositif répéteur (voire plus s'il y a plusieurs dispositifs répéteurs), chaque signal Wi-Fi s'étant propagé sur son propre canal de propagation multi-trajets.

De manière avantageuse, le dispositif répéteur n'est pas un point d'accès Wi-Fi. Le réseau Wi-Fi étendu grâce au répéteur Wi-Fi est ainsi vu par les terminaux Wi-Fi comme venant d'un seul et même point d'accès Wi-Fi. Ainsi, les problèmes dus à la sélection d'un point d'accès Wi-Fi ou au basculement entre points d'accès Wi-Fi sont évités.

De plus, le dispositif répéteur ne nécessite pas de module de codage/décodage Wi-Fi car le signal reçu à réémettre est déjà codé selon la norme Wi-Fi. Le dispositif répéteur fonctionne au niveau radio/couche physique.

Le premier signal Wi-Fi émis par le point d'accès Wi-Fi et le deuxième signal Wi-Fi émis par le répéteur sont sensiblement identiques. On entend par là que les deux signaux transportent les mêmes données, sur le même canal, en utilisant la même fréquence porteuse. Le même schéma de modulation, par exemple basé sur une modulation OFDM, est utilisé pour émettre le signal. Les deux signaux ont donc la même forme d'onde. Les seules différences éventuelles sont une différence de puissance, puisque le signal prélevé émis par le dispositif répéteur est issu d'une division en puissance du signal à émettre par le point d'accès Wi-Fi, puis éventuellement amplifié avant émission par le système antennaire du dispositif répéteur (dans les limites de PIRE - pour Puissance Isotrope Rayonnée Equivalente-réglementaires), ainsi qu'un léger décalage dans le temps, dû notamment au temps de transmission du signal prélevé au dispositif répéteur.

Selon un mode particulier de réalisation de l'invention, les moyens de réception du dispositif répéteur sont configurés pour recevoir en outre, en provenance du dispositif d'extension, un signal de contrôle du signal destiné à être émis par ledit point d'accès Wi-Fi, obtenu par le dispositif d'extension auprès du point d'accès Wi-Fi, les moyens de retransmission radio du dispositif répéteur étant configurés pour prendre en compte ledit signal de contrôle pour émettre le signal analogique fourni par les moyens de conversion numérique-analogique.

Ce signal de contrôle peut notamment être récupéré sous forme analogique au niveau du point d'accès, puis convertit sous forme numérique par le dispositif d'extension avant d'être transmis au dispositif répéteur via la connexion filaire, où il peut être converti sous forme analogique par les moyens de conversion numérique-analogique de ce dispositif répéteur.

Ce signal de contrôle, typiquement délivré par un circuit de codage/décodage Wi-Fi du point d'accès Wi-Fi, peut comprendre notamment des informations (numéro de canal et largeur de bande du signal Wi-Fi par exemple) utilisées par les moyens de transmission radio du module Wi-Fi du point d'accès pour émettre le premier signal Wi-Fi. Ce signal de contrôle est alors pris en compte (en particulier les informations qu'il contient) par les moyens de retransmission du dispositif répéteur pour émettre le signal analogique fourni par les moyens de conversion numérique-analogique en vue de délivrer le deuxième signal Wi-Fi.

La récupération ci-avant du signal de contrôle par le dispositif répétiteur permet à ce dernier de disposer d'informations relatives aux caractéristiques d'émission du premier signal Wi-Fi et ainsi de mieux s'assurer de la similarité des caractéristiques d'émission entre les premier et deuxième signaux Wi-Fi en dépit du fait que le signal prélevé au niveau du point d'accès ait subi des conversions analogique-numérique, puis numérique-analogique, avant de parvenir au dispositif répéteur, ce qui peut entraîner la perte de ces informations.

Corrélativement, selon ce mode particulier de réalisation de l'invention, le dispositif d'extension est configuré pour obtenir à partir du point d'accès Wi-Fi (en particulier à partir d'un circuit de codage/décodage Wi-Fi de ce point d'accès) le signal de contrôle du signal destiné à être émis par ledit point d'accès Wi-Fi autour de ladite fréquence porteuse prédéterminée et pour transmettre ledit signal de contrôle audit dispositif répéteur.

Selon un autre mode particulier de réalisation de l'invention, le dispositif répéteur comprend en outre des moyens de réception radio d'un troisième signal Wi-Fi autour d'une fréquence porteuse prédéterminée, et des moyens de transmission dudit troisième signal Wi-Fi reçu audit dispositif d'extension, via ladite connexion filaire. Corrélativement, selon cet autre mode particulier de réalisation de l'invention, le dispositif d'extension du système d'extension comprend en outre des moyens de réception dudit troisième signal émis par le dispositif répéteur via ladite connexion filaire, et le module Wi-Fi du point d'accès Wi-Fi comprend des moyens pour sommer un quatrième signal Wi-Fi reçu en provenance d'un terminal autour de ladite fréquence porteuse prédéterminée, et le troisième signal reçu en provenance du dispositif répéteur pour délivrer un signal à décoder par un circuit de codage/décodage Wi-Fi du point d'accès Wi-Fi.

Selon ce mode particulier de réalisation de l'invention, lorsqu'un signal Wi-Fi émis par un terminal autour d'une fréquence porteuse prédéterminée est reçu à la fois par les antennes du point d'accès Wi-Fi et par les antennes du dispositif répéteur qui lui est associé, les deux signaux Wi-Fi reçus sont sommés avant d'être décodés par le circuit de codage/décodage Wi-Fi du point d'accès Wi-Fi.

Selon un autre mode particulier de réalisation de l'invention, lorsque le dispositif répéteur opère en mode réception, le troisième signal Wi-Fi reçu par le dispositif répéteur comprend une information représentative de l'utilisation d'au moins un canal de transmission. Corrélativement, dans le système d'extension, le point d'accès Wi-Fi est configuré pour utiliser cette information lors de la sélection d'un canal de transmission pour émettre un signal Wi-Fi.

Selon ce mode particulier de réalisation de l'invention, en mode réception, le dispositif répéteur peut écouter les SSID/RSSI d'autres points d'accès Wi-Fi de l'environnement et remonter cette information au point d'accès Wi-Fi auquel il est associé. Par exemple, le dispositif répéteur reçoit les signaux "Beacon" (balise en français) informant qu'un canal Wi-Fi est utilisé. De cette manière, le point d'accès Wi-Fi auquel le dispositif répéteur est associé peut optimiser le choix du canal de transmission pour émettre un signal Wi-Fi puisqu'il obtient des informations d'utilisation de canal provenant de différents endroits de l'environnement, i.e. là où sont placés des dispositifs répéteurs.

Selon un autre mode particulier de réalisation de l'invention, le point d'accès Wi-Fi comprend une pluralité d'antennes destinées à émettre le signal (autour de ladite fréquence porteuse prédéterminée et les moyens de retransmission radio du dispositif répéteur comprennent une pluralité d'antennes configurées pour émettre le signal analogique autour de ladite fréquence porteuse prédéterminée.

Ce mode de réalisation vise l'extension de couverture Wi-Fi d'un point d'accès de type multi-antennes (i.e. utilisant par exemple une technologie MIMO d'émission/réception), pour lequel la présente invention est particulièrement avantageuse puisqu'elle permet cette extension de couverture au moyen de l'utilisation d'un seul et même support matériel de transmission filaire (par exemple un seul câble Ethernet, une seule fibre,...) entre le point d'accès et le dispositif répéteur alors que ceux-ci sont de type multi-antennes.

Selon un autre mode particulier de réalisation de l'invention, le dispositif d'extension obtient le signal analogique au niveau d'une liaison entre un composant de codage/décodage Wi-Fi dudit module Wi-Fi dudit point d'accès Wi-Fi et d'un circuit intégré radiofréquence du point d'accès Wi-Fi. Selon ce mode particulier de réalisation de l'invention, le signal à réémettre à l'identique par le module répéteur est obtenu juste après le chipset Wi-Fi MAC/BB du point d'accès Wi-Fi, i.e. le module de codage/décodage du signal à transmettre ou reçu selon la norme Wi-Fi, avant que le signal Wi-Fi soit fourni au module RFIC du point d'accès Wi-Fi.

Selon un autre mode particulier de réalisation de l'invention, le point d'accès Wi-Fi comprend au moins un module Front End, connecté à au moins une antenne destinée à émettre le premier signal Wi-Fi, et le dispositif d'extension est configuré pour obtenir le signal analogique à partir du signal en entrée de chacune desdites au moins une antenne ou de chacun desdits au moins un module Front End.

Selon ce mode particulier de réalisation de l'invention, le signal à réémettre à l'identique par le module répéteur est obtenu soit au niveau des antennes du point d'accès Wi-Fi, soit au niveau du module Front-End en amont, en particulier dans le cas d'une émission en mode MIMO, au moyen de plusieurs antennes. Ce mode de réalisation procure l'avantage que le circuit RFIC du dispositif répéteur est standard. Il ne nécessite pas d'être identique au circuit RFIC du point d'accès Wi-Fi. Le circuit RFIC peut ainsi être plus simple puisqu'il s'agit essentiellement d'un module de transposition de fréquence qui ne nécessite pas la connaissance a priori des formatages des signaux.

Selon un autre mode particulier de réalisation de l'invention, le premier signal Wi-Fi émis par le point d'accès Wi-Fi et le deuxième signal Wi-Fi émis par le dispositif répéteur sont émis selon une technologie radio de type OFDM.

Selon un autre mode particulier de réalisation de l'invention, le dispositif répéteur et/ou le dispositif d'extension comprend un module de décalage temporel pour décaler temporellement le deuxième signal Wi-Fi par rapport au premier signal Wi-Fi. Selon ce mode particulier de réalisation de l'invention, le même signal est émis à deux endroits différents mais pas en même temps, ce qui permet d'ajouter de la diversité spatio-temporelle au niveau des multi-trajets du signal radio. Les technologies de transmission radio basées exploitant le multi-trajet du signal radio, par exemple OFDM, sont encore plus performantes.

L'invention concerne également un procédé d'émission, par un dispositif répéteur, d'un signal Wi-Fi d'un point d'accès Wi-Fi, ce procédé comprenant les étapes suivantes :
obtention, via une connexion filaire connectée à un dispositif d'extension d'un point d'accès Wi-Fi, d'un signal numérique résultant de la conversion analogique-numérique d'un signal analogique issu d'une division en puissance d'un signal destiné à être émis par ledit point d'accès Wi-Fi autour d'une fréquence porteuse prédéterminée afin de délivrer un premier signal Wi-Fi ;
conversion du signal numérique reçu via ladite connexion filaire en un signal analogique; et
émission du signal analogique issu de la conversion du signal numérique reçu autour de ladite fréquence porteuse prédéterminée, afin de délivrer un deuxième signal Wi-Fi sensiblement identique au premier signal Wi-Fi.

Selon un mode de réalisation, le procédé comprend en outre la réception, en provenance du dispositif d'extension, d'un signal de contrôle du signal destiné à être émis par ledit point d'accès Wi-Fi, l'émission du signal analogique prenant en compte ledit signal de contrôle.

Selon un autre mode de réalisation, le procédé comprend en outre l'émission du premier signal Wi-Fi par ledit point d'accès Wi-Fi, un décalage temporel étant ajouté entre le deuxième signal Wi-Fi et le premier signal Wi-Fi avant l'émission du signal analogique issu de la conversion du signal numérique reçu.

L'invention concerne également un procédé de réception d'un signal Wi-Fi par un point d'accès Wi-Fi via un réseau Wi-Fi étendu, comprenant les étapes suivantes
réception radio autour d'une fréquence porteuse prédéterminée, par un dispositif répéteur, d'un premier signal Wi-Fi,
transmission dudit signal reçu à un dispositif d'extension dudit point d'accès Wi-Fi, via une connexion filaire reliant ledit dispositif répéteur et le dispositif d'extension,
réception radio autour de ladite fréquence porteuse prédéterminée, d'un deuxième signal Wi-Fi par le module Wi-Fi du point d'accès Wi-Fi,
sommation du deuxième signal Wi-Fi reçu par le module Wi-Fi du point d'accès Wi-Fi et du premier signal Wi-Fi reçu en provenance du dispositif répéteur pour délivrer un signal à décoder, et
transmission du signal à décoder au circuit de codage/décodage Wi-Fi du point d'accès Wi-Fi.

Selon un mode particulier de réalisation de l'invention, le premier signal Wi-Fi comprend une information représentative de l'utilisation d'au moins un canal de transmission.

### 4. Liste des figures

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
- La figure 1 illustre un système d'extension de couverture d'un point d'accès Wi-Fi selon un mode particulier de réalisation de l'invention,
- La figure 2 illustre un agencement des éléments d'un système d'extension de couverture d'un point d'accès Wi-Fi selon un mode particulier de réalisation de l'invention,
- La figure 3 illustre un agencement des éléments d'un système d'extension de couverture d'un point d'accès Wi-Fi selon un autre mode particulier de réalisation de l'invention,
- La figure 4 illustre des étapes d'un procédé d'émission d'un signal Wi-Fi d'un point d'accès Wi-Fi selon un mode particulier de réalisation de l'invention, et
- La figure 5 illustre des étapes d'un procédé de réception d'un signal Wi-Fi d'un point d'accès Wi-Fi selon un mode particulier de réalisation de l'invention.

### 5. Description d'un mode de réalisation de l'invention

L'invention propose une solution nouvelle pour étendre la couverture Wi-Fi d'un point d'accès Wi-Fi qui ne présente pas les inconvénients de l'art antérieur.

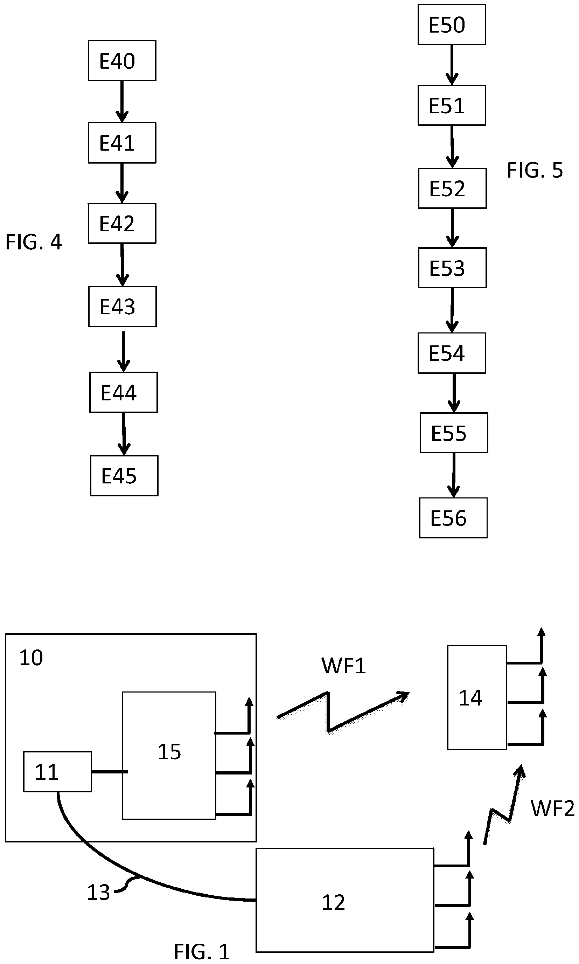

La **figure 1** illustre un système d'extension de couverture d'un point d'accès Wi-Fi selon un mode particulier de réalisation de l'invention.

Un tel système comprend un point d'accès Wi-Fi (10), par exemple une passerelle domestique située au domicile d'un utilisateur abonné auprès d'un opérateur, ou une passerelle d'accès Internet d'une entreprise abonnée auprès d'un opérateur de communication, comprenant un module Wi-Fi 15 (chipset Wi-Fi) configuré pour mettre en oeuvre l'émission et la réception d'un signal Wi-Fi vers et depuis des terminaux Wi-Fi associés à ce point d'accès (10). En d'autres termes, le module Wi-Fi (15) est l'élément du point d'accès (10) qui met en oeuvre le protocole de communication au niveau de la couche physique et de la couche MAC conformément au standard IEEE utilisé (802.11abg/n/ac/ax/ad/ay/be principalement).

Les signaux émis par le point d'accès Wi-Fi (10) peuvent utiliser une modulation de type OFDM, et en particulier une technologie d'accès multiple de type OFDMA, sans pour autant que la présente invention ne se limite à ces seuls types de technologie d'accès ou de modulation.

Le point d'accès (10) comprend également de manière classique d'autres modules (processeur, mémoire, etc...) nécessaire à son fonctionnement et à l'application des autres couches de transport de l'information. Ces éléments classiques n'étant pas utiles à la compréhension de l'invention, ils ne sont pas reproduits sur la figure 1.

Le système illustré en figure 1 comprend également un dispositif d'extension (11), avantageusement intégré dans le point d'accès Wi-Fi (10) mais pouvant également lui être connecté sans y être intégré. Ce dispositif d'extension (11) est configuré pour récupérer le signal analogique destiné à être émis par le module Wi-Fi (15) du point d'accès (10).

Le système illustré en figure 1 comprend également un dispositif répéteur (12), ce dispositif répéteur étant un module radio distant qui répète à l'identique le signal Wi-Fi émis par le point d'accès Wi-Fi (10).

Pour cela, le dispositif d'extension (11) et le dispositif répéteur (12) sont reliés par un support filaire (13) tel qu'un câble coaxial, une fibre optique ou un câble Ethernet. Le support filaire (13) peut aussi être du type courant porteur, i.e. un câble électrique au sein d'un réseau électrique domestique, pour alimenter des prises électriques murales.

Le signal Wi-Fi récupéré par le dispositif d'extension (11) est transmis via le support filaire (13) au dispositif répéteur (12) qui le répète à l'identique du point d'accès Wi-Fi.

Ainsi, le système d'extension de couverture Wi-Fi présenté ici étend la couverture radio d'un point d'accès (AP) Wi-Fi en répétant à distance, et de manière légèrement décalée dans le temps, le signal Wi-Fi du point d'accès Wi-Fi.

Le principe consiste à prélever une partie de la puissance du signal destiné à être émis par le module Wi-Fi du point d'accès Wi-Fi, soit en bande de base, soit autour de sa fréquence porteuse, pour la réémettre plus loin et à l'identique à l'aide d'un ou plusieurs modules radio distants, aussi appelés dispositifs répéteurs par la suite.

Par réémission identique, on entend par là que le dispositif répéteur utilise le même canal, la même modulation (MCS, largeur de bande, nombre de flux spatiaux,...), les mêmes données, mais avec un léger décalage dans le temps, que le point d'accès Wi-Fi. Le point d'accès Wi-Fi et le dispositif répéteur émettent ainsi respectivement un premier signal Wi-Fi et un deuxième signal Wi-Fi sensiblement identique.

Le décalage dans le temps peut être généré naturellement par les temps de traitement des différents composants insérés dans les dispositifs d'extension (11) et répéteur (12), ainsi que par le temps de trajet dans le support filaire (13).

Selon un mode particulier de réalisation de l'invention, si le décalage dans le temps est trop faible au regard de l'intervalle de garde de la modulation OFDM utilisée par le point d'accès Wi-Fi, un retard spécifique peut être ajouté au signal prélevé par un composant dédié (e.g. ligne à retard) pouvant être incorporé dans l'un ou l'autre des dispositifs d'extension et répéteur.

Cette technique peut s'apparenter à une combinaison de macro-diversité spatiale et temporelle.

La station cliente Wi-Fi, ou terminal client Wi-Fi (14 sur la figure 1), reçoit au final la combinaison de deux (voir plus) signaux radios WF1,WF2 s'étant chacun propagés sur leur propre canal de propagation multi-trajets : un canal de propagation issu du point d'accès Wi-Fi principal (10) pour le signal radio WF1 et un canal de propagation issu du module radio distant (dispositif répéteur 12) pour le signal radio WF2.

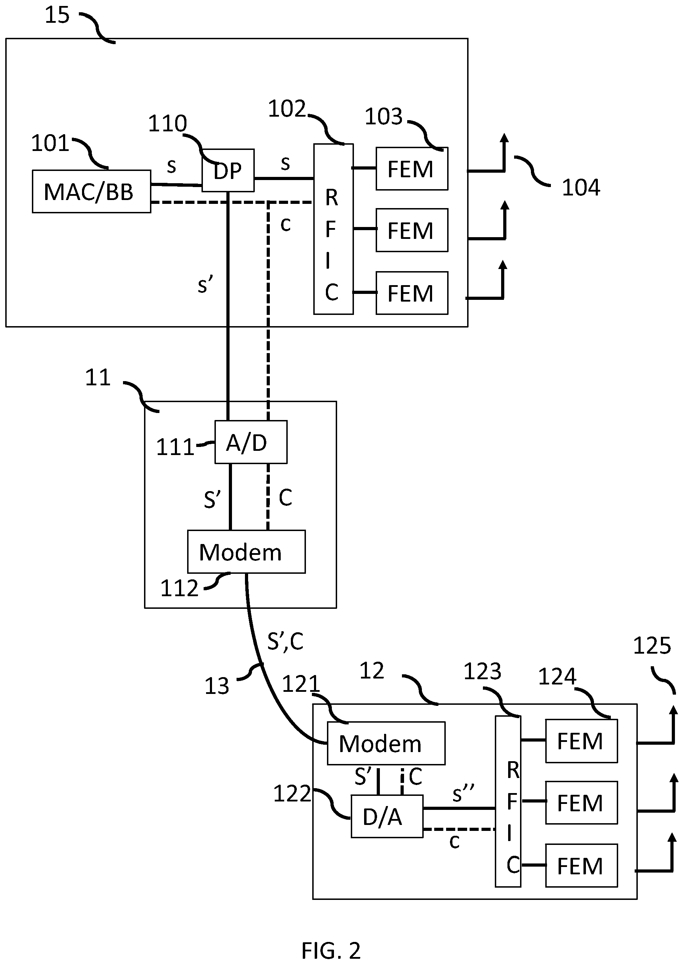

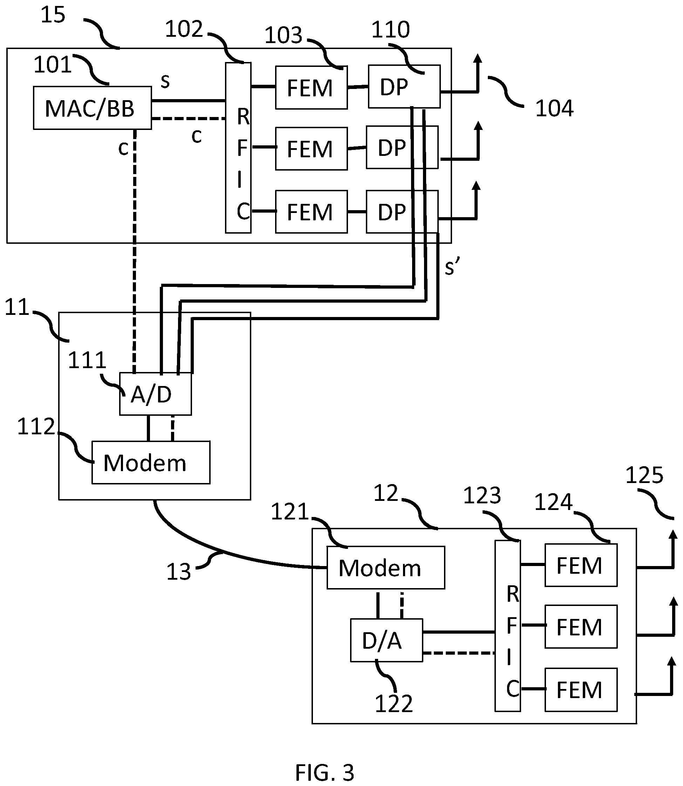

L'information de canal est passée au module distant (12) dans un signal de contrôle (noté « c » sur les figures 2 et 3 décrites plus loin).

Le canal est connu, ou choisi par le point d'accès Wi-Fi (10) en utilisant un algorithme de sélection classique. Classiquement, le choix du canal est fait en fonction des niveaux de puissance des SSID (pour Service Set Identifier en anglais) vus côté point d'accès Wi-Fi (10).

Selon un mode particulier de réalisation de l'invention, en mode réception, le dispositif répéteur (12) peut remonter les niveaux de puissance RSSI des SSID de l'environnement au point d'accès Wi-Fi (10). Ainsi, le point d'accès Wi-Fi (10) peut tenir compte de ces informations pour sélectionner un canal de transmission lorsqu'il souhaite émettre un signal Wi-Fi. Par exemple, dans la liste des niveaux de puissance SSID utilisée par le point d'accès Wi-Fi (10), il y aura en plus les niveaux de puissance des SSID vus du côté du dispositif répéteur (12).

On décrit ci-dessous le principe dans le cas où un seul dispositif répéteur est ajouté, le système pouvant bien sûr être généralisé à plusieurs dispositifs répéteurs distants. Dans ce cas, chaque dispositif répéteur devra être relié de manière filaire au point d'accès Wi-Fi pour obtenir le signal Wi-Fi à réémettre.

Si on désigne par S(F) la réponse fréquentielle du signal émis par le point d'accès Wi-Fi (10) en bande de base, le terminal (14) reçoit un signal composé du signal utile et de bruit, le signal utile correspondant au produit S(F-F0)x(H1(F-F0)+H2(F-F0)), avec H1(F-F0) et H2(F-F0) désignant respectivement les fonctions de transfert du canal radio multi-trajets entre le point d'accès Wi-Fi (10) et le terminal client (14) et entre le dispositif répéteur (12) et le terminal client (14) autour d'une même fréquence porteuse F0.

Selon l'art antérieur, avec un extendeur Wi-Fi classique, i.e. fonctionnant en point d'accès Wi-Fi, un terminal reçoit un signal composé d'un signal utile et de bruit, dans lequel le signal utile correspond au produit S1(F-F0)xH1(F-F0) ou S'2(F-F1)xH2(F-F1), avec S1 correspondant à la réponse fréquentielle du signal émis par le point d'accès Wi-Fi principal et S'2 correspondant à la réponse fréquentielle du signal émis par l'extendeur Wi-Fi classique, S1 et S'2 pouvant être différents, de même que les fréquences porteuses F0 et F1 respectivement du point d'accès Wi-Fi principal et de l'extendeur Wi-Fi classique qui peuvent également être différentes.

Selon l'art antérieur, c'est en particulier ce qui peut conduire à une dégradation de performances, par exemple lorsque le terminal Wi-Fi reste sur le 1er point d'accès Wi-Fi principal en utilisant le signal reçu S1xH1 alors que le signal S'2xH2 émis par l'extendeur Wi-Fi classique pourrait donner un meilleur débit. Toutefois, ceci est très difficile à anticiper lorsque les points d'accès Wi-Fi et extendeur Wi-Fi fonctionnent en MIMO (pour Multiple Input Multiple Output en anglais). En effet, avec un tel fonctionnement, un meilleur niveau de signal n'implique pas forcément un meilleur débit.

Selon l'invention, le système décrit en relation avec la figure 1 peut être étendu par l'ajout de plusieurs modules radio distants ou dispositifs répéteurs (12) selon la taille de la résidence concernée. De plus, des modules radio distants (12) peuvent être ajoutés pour chaque bande de fréquence (2.4 GHz, 5 GHz, 60 GHz, ...) et technologie jugées utiles (4G, 5G, ...). Il suffit que tous les dispositifs répéteurs et le point d'accès Wi-Fi utilise une même technique de transmission radio, par exemple l'OFDM (pour Orthogonal Frequency-Division Multiplexing en anglais).

Le système selon l'invention fonctionne également dans le sens montant, c'est-à-dire que les signaux reçus par le point d'accès Wi-Fi (10) d'une part et par le(s) module(s) radio distant(s) (12) d'autre part sont sommés avant décodage par le chipset Wi-Fi (15) du point d'accès Wi-Fi (10). Les sens montant et descendant sont séparés par un système standard de duplexeurs.

Le principe d'extension de couverture radio Wi-Fi décrit offre une amélioration significative de la couverture radio Wi-Fi du point d'accès au niveau du débit et de la portée.

Le réseau Wi-Fi, établi par le point d'accès et le(s) dispositif(s) répéteur(s) selon l'invention qui lui sont associés, est vu comme par les terminaux Wi-Fi comme ne venant que d'un seul et même point d'accès. Cela supprime les problèmes de basculement (*handover*) ou de « *client steering* » (technologie qui permet de forcer le terminal Wi-Fi à s'associer sur un AP autre que celui qui est sélectionné par défaut par son propre gestionnaire de connexion Wi-Fi) entre le point d'accès Wi-Fi principal et les extendeurs Wi-Fi classiques. Contrairement aux solutions de l'art antérieur utilisant un extendeur Wi-Fi classique filaire/Wi-Fi ou Wi-Fi/Wi-Fi, grâce à l'invention, le terminal n'a pas à choisir à quel point d'accès Wi-Fi s'associer car, il ne voit qu'un seul point d'accès Wi-Fi.

L'appairage initial est également facilité. En effet, il n'y a pas de changement quant au mécanisme d'appairage en direct avec un point d'accès Wi-Fi, sauf que le terminal client Wi-Fi pourra s'appairer tout en étant placé plus loin. La même clé de sécurité est conservée.

Le principe d'extension de couverture radio Wi-Fi selon l'invention permet également une économie de spectre en utilisant le même canal dans tout le lieu couvert avec un tel système d'extension de couverture.

Le choix du canal Wi-Fi est ainsi optimisé, un point d'accès Wi-Fi sélectionnant selon l'art antérieur un canal en exploitant les niveaux de signaux des points d'accès Wi-Fi voisins détectés. Selon un mode particulier de réalisation de l'invention, le point d'accès Wi-Fi aura aussi accès aux niveaux de signaux d'autres points d'accès Wi-Fi voisins du/des dispositifs répéteurs.

Selon l'invention, le point d'accès Wi-Fi peut conserver son algorithme en exploitant les données SSID/RSSI (pour Received Signal Strength Indication en anglais) vues aussi bien côté point d'accès Wi-Fi que côté dispositif(s) répéteur(s). Le choix de canal est alors de préférence celui qui est le meilleur canal sur les zones de couverture du point d'accès et de(s) dispositif(s) répéteur(s) qui lui sont associés, et non plus le meilleur canal sur la seule zone limitée à la couverture du point d'accès Wi-Fi ou de l'extendeur Wi-Fi classique.

Le choix de canal est alors plus « optimal » qu'avec les solutions de l'art antérieur dans la mesure où les informations de brouillage à plusieurs endroits différents de la résidence sont exploitées dans le choix du canal, et non plus localement au seul endroit où est positionné le point d'accès Wi-Fi principal.

La **figure** 2 illustre un agencement des éléments d'un système d'extension de couverture d'un point d'accès Wi-Fi selon un mode particulier de réalisation de l'invention.

Sur la figure 2, seuls les éléments du point d'accès Wi-Fi (10) qui sont nécessaires à l'invention ont été représentés. Le module Wi-Fi (15) est ici représenté à l'aide d'un exemple d'une transmission MIMO 3x3, toutefois le principe de l'invention s'étend à d'autres types de transmission MIMO

Classiquement, le module Wi-Fi (15) comprend un module (101) de codage/décodage Wi-Fi (MAC/BB), un circuit (102) radio fréquence (RFIC) et 3 modules (103) FEM (pour Front End Module en anglais) comprenant notamment un amplificateur de signal, un amplificateur faible bruit (LNA pour Low Noise Amplifier), un duplexeur permettant de séparer le sens montant et le sens descendant du canal. Le module Wi-Fi (15) illustré sur la figure 2 comprend également trois antennes (104), connectées respectivement aux trois modules FEM.

Selon l'invention, le dispositif d'extension (11) comprend un convertisseur (111) analogique numérique (A/D) et un modulateur-démodulateur (112, Modem) pour adapter le signal à transmettre au support filaire utilisé

Selon le mode particulier de réalisation décrit ici, le dispositif d'extension (11) obtient un signal analogique (noté « s' » sur la figure 2) prélevé à partir d'un signal (noté "s" sur la figure 2 et représenté en trait plein) à émettre par le module Wi-Fi (15). Ce signal s' est typiquement obtenu au niveau de la liaison entre le module de codage/décodage Wi-Fi (101) et du circuit (102) RFIC. Le signal s est le signal OFDM en bande de base voies I/Q issu du codeur/décodeur MAC/BB.

Le prélèvement d'une partie du signal s est fait par l'ajout d'un diviseur de puissance (110) entre la liaison MAC/BB et RFIC et le convertisseur A/D (111) du dispositif d'extension. Par prélèvement, on entend ici le prélèvement d'un faible pourcentage de la puissance du signal s. Un tel prélèvement d'une partie du signal est donc réalisé par la division en puissance du signal s pour délivrer le signal s'.

Le dispositif d'extension (11) récupère aussi le signal de contrôle (noté "c" sur la figure 2) destiné à contrôler l'émission du signal s par le module Wi-Fi (15), en fournissant des informations au circuit (102) radio fréquence (RFIC) et aux modules (103) FEM, telles que le numéro de canal et largeur de bande du signal Wi-Fi par exemple. Ce signal de contrôle c se présente également typiquement sous une forme analogique, par exemple sous la forme de signaux TTL 0V ou 5V.

Les signaux s' et c sont convertis par le convertisseur (111) en des signaux numériques S' et C, transmis via le Modem (112) et le lien filaire (13) au dispositif répéteur (12). Ceci permet de s'adapter aux contraintes de bande passante du support utilisé pour transmettre le signal s' sous forme analogique, et donc de toute limitation quant au type de lien filaire à utiliser pour respecter une telle contrainte. En outre, le fait de convertir aussi bien le signal « utile » s' que le signal de contrôle c en signaux numériques S' et C permet de transmettre ensemble ces deux signaux numériques sur le lien filaire (13), voire de leur appliquer éventuellement tout traitement numérique approprié en vue d'optimiser cette transmission.

Selon l'invention, le dispositif répéteur (12) comprend un modulateur-démodulateur (121, aussi appelé « Modem ») relié à des moyens (122) de conversion numérique-analogique eux-mêmes reliés à des moyens de retransmission radio. En particulier, les moyens de conversion numérique-analogique (123) peuvent être implémentés sous la forme d'un convertisseur numérique-analogique (D/A). Les moyens de retransmission peuvent être implémentés sous la forme d'un circuit (123) radio fréquence RFIC relié à N (ici N=3 à titre d'exemple) modules (124) FEM (pour « Front End Module ») eux-mêmes reliés chacun à N antennes (125).

Le dispositif répéteur (12) reçoit donc les signaux numériques S' et C via le lien filaire (13), le modulateur-démodulateur (121) démodule ces deux signaux S' et C, puis les fournit au convertisseur (122) qui les convertit respectivement en signaux analogiques s" et c'. Les signaux analogiques s" et c' sont ensuite transmis au circuit RFIC (123) en vue d'émettre le signal analogique s" à l'identique du signal s, toutefois légèrement décalé dans le temps par rapport au premier signal Wi-Fi s émis par le module Wi-Fi (15). Eventuellement, le signal s" est amplifié avant émission par le système antennaire du dispositif répéteur, dans les limites de PIRE réglementaires.

Pour émettre le signal analogique s", le circuit RFIC (123) utilise le signal de contrôle "c" reçu du point d'accès Wi-Fi, et notamment les informations de canal et de modulations qu'il peut contenir.

Selon le mode particulier de réalisation décrit ici, le circuit RFIC (123) est avantageusement identique au circuit RFIC (102) du module Wi-Fi (15), afin que le signal analogique s" soit réparti sur les modules FEM (124) et les antennes (125) du dispositif répéteur (12) de la même manière que le signal s est réparti sur les modules FEM (103) et les antennes (104) du module Wi-Fi (15).

La **figure 3** illustre un agencement des éléments d'un système d'extension de couverture d'un point d'accès Wi-Fi selon un autre mode particulier de réalisation de l'invention. Les éléments de la figure 3 sont quasiment identiques à ceux présentés en relation avec la figure. Seul le point de prélèvement du signal s' est différent.

Selon ce mode particulier de réalisation de l'invention, le signal s' est prélevé par le dispositif d'extension (11) au niveau de la liaison entre chaque module FEM (103) et chaque antenne (104). De manière alternative, le signal s' peut aussi être prélevé par le dispositif d'extension (11) au niveau de la liaison entre le circuit RFIC (102) et chaque module FEM (103).

Le signal de contrôle "c" est lui prélevé au niveau du module (101) de codage/décodage Wi-Fi (MAC/BB).

Le prélèvement d'une partie du signal s pour délivrer le signal prélevé s' est réalisé par l'ajout d'un diviseur de puissance (110) entre chaque antenne (104) et son module FEM (103) correspondant, ou entre le circuit RFIC (102) et chaque module FEM (103), de sorte à fournir le signal prélevé s' au convertisseur A/D (111) du dispositif d'extension.

Selon ce mode particulier de réalisation de l'invention, les signaux sont prélevés avant ou après les modules FEM (selon la connectique). Une très faible partie de la puissance émise est nécessaire. En effet, les convertisseurs A/D n'ont pas besoin des 23 à 30 dBm émis (0 dBm voire moins peut suffire, i.e. moins de 1/1000 de la puissance émise peut suffire). Le circuit RFIC (123) du dispositif répéteur (12) est ici plus standard que celui du mode particulier de réalisation décrit en relation avec la figure 2 dans lequel le signal est prélevé en bande de base. En effet, selon le mode particulier de réalisation décrit en relation avec la figure 3, le circuit RFIC (123) est essentiellement un module de transposition de fréquence qui ne nécessite pas la connaissance des formatages des signaux.

Le signal s' prélevé au niveau des antennes ou des FEM est ici à 3 dimensions (dans le cas d'un MIMO 3x3), qui peuvent être mises en série au niveau du convertisseur A/D ou du modem. Cette mise en série est l'objet du protocole CPRI ou tout autre protocole permettant la transmission du signal s' au dispositif répéteur. Selon ce mode particulier de réalisation de l'invention, le format/correspondance avec les antennes est ici connu.

Le principe général de l'invention a été décrit ici pour un signal à émettre par le module Wi-Fi d'un point d'accès, i.e. dans le sens descendant. Les éléments décrits en relation avec les figures 2 et 3 fonctionnement de manière réciproque dans le sens montant (réception d'un signal Wi-Fi par les antennes (104 et 125).

La séparation des signaux radio entre sens montant et descendant nécessite des duplexeurs, généralement cette fonction est intégrée dans les modules « FEM ». De même, les circuits RFIC doivent également savoir travailler sur les 2 sens (transposition de fréquence vers la fréquence souhaitée en sens descendant, transposition vers la bande de base pour le sens montant).

Les convertisseurs A/D et modem doivent également fonctionner dans les 2 sens, pas de manière simultanée puisqu'on Wi-Fi on ne peut recevoir et émettre en même temps.

Dans le sens montant, la sommation des signaux reçus par le module Wi-Fi (15) du point d'accès et par le(s) module(s) radio distant(s) (dispositif répéteur 12) se fait au niveau du module Wi-Fi (15).

Plus précisément, par exemple dans le cas du mode de réalisation décrit en relation avec la figure 3, la sommation des signaux reçus se fait au niveau des connecteurs d'antennes ou de modules FEM.

Dans le cas du mode de réalisation décrit en relation avec la figure 2, la sommation des signaux reçus est faite au niveau de la liaison MAC/BB - RFIC.

Dans le sens descendant, comme expliqué ci-dessus, le signal est prélevé par un diviseur de puissance. Dans le sens montant c'est un coupleur de puissance qui réalise la sommation des signaux.

Selon différentes variantes de réalisation, un même composant pour savoir faire les 2 fonctions (diviseur/coupleur).

Dans le cas où le signal est prélevé au niveau antenne ou FEM, il est préférable d'avoir un diviseur/coupleur par connecteur d'antenne ou FEM.

Selon un mode particulier de réalisation de l'invention, un retard temporel peut être ajouter au signal s' par rapport au signal s ou bien au signal s par rapport au signal s'. Par exemple, cela peut être fait à l'aide d'un composant dédié de type ligne à retard, non représenté sur les figures 2 ou 3.

Ainsi, un décalage temporel est ajouté au deuxième signal Wi-Fi émis par le dispositif répéteur par rapport au premier signal Wi-Fi émis par le point d'accès Wi-Fi ou bien l'inverse selon la variante de réalisation choisie. Un tel retard peut être ajouté aussi bien en émission qu'en réception.

Le standard Wi-Fi définit plusieurs valeurs d'intervalles dits de intervalles garde selon le standard utilisé : par exemple en 802.11n/ac, 2 valeurs sont possibles: 400ns ou 800ns.

Cet intervalle est choisi de manière à absorber les temps de retards liés aux multi-trajets du canal de propagation et permettre d'optimiser les performances de l'OFDM. En particulier, plus il y a de multi-trajets (avec un étalement des retards dans les limites de l'intervalle de garde), meilleures seront les performances de l'OFDM. Autrement dit, un meilleur débit est obtenu pour des niveaux de puissance reçue identiques.

Par exemple, dans le cas d'un point d'accès Wi-Fi mis en oeuvre par une passerelle domestique, donc pour des communications Wi-Fi à l'intérieur d'un domicile, sur la base d'un intervalle de garde de 400ns selon le standard 802.11n/ac, le retard à ajouter peut être de 100ns par exemple, sans risque de dépasser la tolérance du système aux multi-trajets.

Différentes variantes de réalisation sont possibles pour ajouter ce retard, en fonction des performances des composants électroniques ajoutés pour la mise en oeuvre de l'invention.

Selon une première variante, si les temps de traitements T (ns) du module d'extension et de la division en puissance sont très rapides (par exemple <100ns), le complément de retard (100 - T) est alors ajouté au niveau des dispositifs répéteurs.

Selon une deuxième variante, si les temps de traitements du module d'extension et de la division en puissance sont « relativement importants » (par exemple de l'ordre de quelques microsecondes noté x), dans ce cas, le retard est ajouté au niveau du point d'accès Wi-Fi lorsque l'on prélève le signal sur la voie du signal s destiné à être émis par le point d'accès Wi-Fi. Ce retard est alors de x microsecondes - 100ns pour avoir un décalage de 100ns entre le premier signal Wi-Fi émis par le point d'accès Wi-Fi et le deuxième signal Wi-Fi émis par le dispositif répéteur.

La **figure 4** illustre des étapes d'un procédé d'émission, par un dispositif répéteur, d'un signal Wi-Fi d'un point d'accès Wi-Fi selon un mode particulier de réalisation de l'invention.

Lors d'une étape E40, un premier signal Wi-Fi est émis par le point d'accès Wi-Fi (10) à partir d'un signal analogique s, autour d'une fréquence porteuse prédéterminée. La fréquence porteuse prédéterminée correspond par exemple à une fréquence associée à un canal de transmission sélectionné par le point d'accès Wi-Fi.

Lors d'une étape E41, le dispositif d'extension (11) du point d'accès Wi-Fi (10) obtient un signal analogique s' correspondant à une partie du signal s émis lors de l'étape E40, ainsi qu'éventuellement un signal de contrôle c destiné à contrôler l'émission du signal s par le point d'accès Wi-Fi, à partir d'un module Wi-Fi (15) du point d'accès Wi-Fi. L'étape d'obtention E41 peut être mise en oeuvre après l'étape E40 ou bien simultanément à l'étape E40.

Lors d'une étape E42, le dispositif d'extension (11) convertit le signal analogique s' obtenu à l'étape E41 en un signal numérique S'. Il peut également convertir le signal de contrôle c, s'il l'a obtenu lors de l'étape E41, en un signal numérique de contrôle C durant cette même étape.

Lors d'une étape E43, le dispositif d'extension (11) transmet le signal numérique S' (ainsi qu'éventuellement le signal numérique de contrôle C) au dispositif répéteur (12) relié au dispositif d'extension via une connexion filaire (13).

Lors d'une étape E44, après avoir reçu le signal numérique S', le dispositif répéteur (12) convertit ce signal numérique S' en un signal analogique s" qu'il est destiné à émettre. Il peut également convertir le signal numérique de contrôle C, s'il l'a reçu lors de l'étape E43, en un signal analogique de contrôle à cette occasion.

Lors d'une étape E45, le dispositif répéteur (12) transmet par onde radio autour de la fréquence porteuse prédéterminée, le signal analogique s" issu de la conversion opérée lors de l'étape E42'. Cette émission de signal radio est faite de manière sensiblement identique à l'émission du signal Wi-Fi réalisée par le module Wi-Fi (15) du point d'accès Wi-Fi. Autrement dit, la même fréquence porteuse est utilisée, et donc le même canal, ainsi que la même modulation.

La **figure 5** illustre des étapes d'un procédé de réception d'un signal Wi-Fi d'un point d'accès Wi-Fi selon un mode particulier de réalisation de l'invention.

Lors d'une étape E50, le dispositif répéteur (12) reçoit via ses antennes radio, autour d'une fréquence porteuse prédéterminée, un signal Wi-Fi. Un tel signal Wi-Fi peut avoir été émis par un terminal en communication avec le point d'accès Wi-Fi, ou bien par un autre point d'accès Wi-Fi. Par exemple, dans ce cas, le signal Wi-Fi correspond à une trame "Beacon" d'un point d'accès Wi-Fi comprenant une information de SSID du point d'accès Wi-Fi, associée à un niveau RSSI d'un canal utilisé par le point d'accès Wi-Fi. De telles informations correspondent ainsi à une information d'utilisation d'un canal de transmission.

Lors d'une étape E51, le dispositif répéteur (12) convertit le signal analogique reçu en un signal numérique et transmet ce signal numérique au dispositif d'extension (11) du point d'accès Wi-Fi, via la connexion filaire (13) reliant le dispositif répéteur et le dispositif d'extension (étape E52).

Lors d'une étape E53, le dispositif d'extension convertit le signal numérique provenant du dispositif répéteur en un signal analogique qu'il fournit alors au module Wi-Fi (15) du point d'accès Wi-Fi.

Lors d'une étape E54, le module Wi-Fi (15) reçoit éventuellement un signal Wi-Fi autour de la même fréquence porteuse prédéterminée, via les antennes 104 du module Wi-Fi (15). Ce signal Wi-Fi peut être en provenance d'un terminal ou d'un autre point d'accès Wi-Fi.

Lors d'une étape E55, le signal reçu par le module Wi-Fi (15) du point d'accès Wi-Fi et le signal fourni par le dispositif d'extension (11) et provenant du dispositif répéteur (12) sont sommés dans le point d'accès Wi-Fi pour délivrer un signal Wi-Fi à décoder.

Lors d'une étape E56, le signal Wi-Fi à décoder est transmis au circuit de codage/décodage Wi-Fi (101) du point d'accès Wi-Fi.

Selon un mode particulier de réalisation de l'invention, le signal Wi-Fi décodé est une trame "Beacon" d'un autre point d'accès Wi-Fi. Il comprend ainsi une information représentative de l'utilisation par cet autre point d'accès Wi-Fi d'un canal de transmission associé à ladite fréquence porteuse prédéterminée. Une telle information est alors remontée à un module logiciel du point d'accès Wi-Fi mettant en oeuvre l'algorithme de sélection de canal pour la transmission de données. L'algorithme de sélection de canal mis en oeuvre par le point d'accès Wi-Fi est ainsi optimisé puisqu'il bénéficie des informations d'utilisation de canal disponibles au niveau des dispositifs répéteurs distants qui lui sont associés.

Les procédés d'émission et de réception d'un signal Wi-Fi, dans un réseau Wi-Fi étendu via le système d'extension de couverture Wi-Fi décrit précédemment, permettent d'ajouter de la diversité temporelle au canal grâce au décalage dans le temps des émissions des points d'accès et des modules radio distants. Une telle diversité est bénéfique pour les performances de l'OFDM tant que le retard entre les émissions reste dans les limites de l'intervalle de garde du système.

De plus, l'extension de couverture Wi-Fi est réalisée au niveau purement radio, ainsi, il n'y a pas de contraintes de mise à jour logicielle.

Afin de connecter le dispositif d'extension au module Wi-Fi du point d'accès Wi-Fi, une connectique adaptée est nécessaire pour prélever le signal à répéter, ainsi que les signaux de synchro/commandes (signal "c" sur les figures 2 et 3).

Selon le mode de réalisation considéré, ceci peut être compliqué à obtenir dans le contexte d'une intégration croissante des fonctions radio et de la disparition de la connectique sur les nouveaux chipsets Wi-Fi, notamment pour le mode de réalisation par prélèvement des signaux en bande de base (figure 2). C'est pourquoi, pour ce mode de réalisation particulier, un travail devra être mené en collaboration entre le fabricant de chipset et l'industriel/intégrateur pour disposer de la connectique adaptée.

Un protocole (propriétaire ou non) peut s'avérer nécessaire pour transmettre le signal répété à distance sur un support de type filaire (coaxial, fibre, Ethernet, ..), notamment afin de ne pas limiter les performances du Wi-Fi (2.5G Ethernet bidirectionnel probable pour la future génération 802.11ax). Des protocoles issus du domaine mobile peuvent aisément être utilisées ou adaptés comme le protocole CPRI (pour Common Public Radio Interface en anglais) qui fait le lien entre la partie bande de base (BBU pour BaseBand Unit en anglais) et la tête radio déportée (RRH pour Remote Radio Head an anglais) des stations de base mobile ou encore le protocole IEEE P1904.3 utilisé pour transmettre des signaux radio sur Ethernet.

Il est à noter également que les signaux du point d'accès sont répétés à l'identique et donc en particulier tous les SSID émis. Afin d'éviter cela, un filtrage des SSID souhaités peut être ajouté au niveau du chipset Wi-Fi du point d'accès.

Comme pour un extendeur Wi-Fi classique, des règles de positionnement des modules radio distants doivent être respectées pour éviter de perturber le point d'accès principal, notamment là où la couverture initiale du point d'accès était satisfaisante.

Lorsqu'il y a plusieurs points d'accès Wi-Fi fonctionnant avec différentes technologies, ou si un même point d'accès est capable de fonctionner selon différentes technologies Wi-Fi (Wi-Fi 2.4 GHz, Wi-Fi 5 GHz, Wi-Fi 60 GHz), ou 3GPP (4G, 5 G, ..), il est avantageux d'ajouter un module radio distant (et donc également un dispositif d'extension correspondant) pour chaque technologie (Wi-Fi 2.4 GHz, Wi-Fi 5 GHz, Wi-Fi 60 GHz, 4G, 5 G, ..) pour laquelle on souhaite étendre la couverture. En effet, les composants électroniques et les antennes ne sont pas forcément les mêmes selon les technologies et les bandes de fréquences.

## Revendications

1. Dispositif répéteur (12) de signal Wi-Fi comprenant:
des moyens de réception (121), via une connexion filaire (13) connectée à un dispositif d'extension (11) d'un point d'accès Wi-Fi (10), d'un signal numérique (S') résultant de la conversion analogique-numérique d'un signal analogique (s') issu d'une division en puissance d'un signal (s) destiné à être émis par ledit point d'accès Wi-Fi autour d'une fréquence porteuse prédéterminée afin de délivrer un premier signal Wi-Fi ;
des moyens de conversion numérique-analogique (122) configurés pour convertir le signal numérique (S') reçu via ladite connexion filaire en un signal analogique (s") ; et
des moyens de retransmission radio (123, 124, 125) configurés pour émettre le signal analogique (s") fourni par les moyens de conversion numérique-analogique (122) autour de ladite fréquence porteuse prédéterminée, afin de délivrer un deuxième signal Wi-Fi.

2. Dispositif répéteur selon la revendication 1, dans lequel:
les moyens de réception (121) sont configurés pour recevoir en outre, en provenance du dispositif d'extension, un signal de contrôle (c) du signal destiné à être émis par ledit point d'accès Wi-Fi, obtenu par le dispositif d'extension auprès du point d'accès Wi-Fi;
lesdits moyens de retransmission radio (123, 124, 125) étant configurés pour prendre en compte ledit signal de contrôle (c) pour émettre le signal analogique (s").

3. Dispositif répéteur selon l'une quelconque des revendications 1 ou 2, comprenant en outre des moyens de réception radio (125) d'un troisième signal Wi-Fi et des moyens de transmission (121) dudit troisième signal Wi-Fi reçu audit dispositif d'extension (11), via ladite connexion filaire (13).

4. Dispositif répéteur selon la revendication 3, dans lequel ledit troisième signal Wi-Fi comprend une information représentative de l'utilisation d'au moins un canal de transmission.

5. Dispositif répéteur selon l'une des revendications 1 à 4, dans lequel le point d'accès Wi-Fi (10) comprend une pluralité d'antennes destinées à émettre le signal (s) autour de ladite fréquence porteuse prédéterminée et les moyens de retransmission radio (123,124,125) comprennent une pluralité d'antennes configurées pour émettre le signal analogique (s") autour de ladite fréquence porteuse prédéterminée.

6. Système d'extension de couverture d'un point d'accès Wi-Fi (10), comprenant un dispositif d'extension (11) et au moins un dispositif répéteur (12) selon l'une des revendications 1 à 5, ledit dispositif d'extension (11) comprenant:
des moyens de conversion analogique-numérique (111) configurés pour convertir en un signal numérique (S') un signal analogique (s') issu d'une division en puissance d'un signal (s) à émettre par ledit point d'accès Wi-Fi autour d'une fréquence porteuse prédéterminée afin de délivrer un premier signal Wi-Fi; et
des moyens de transmission (112) dudit signal numérique (S') audit au moins un dispositif répéteur (12) via une connexion filaire (13),
ledit au moins un dispositif répéteur (12) étant configuré pour émettre un signal analogique (s"), résultant d'une conversion numérique-analogique du signal numérique (S') reçu en provenance du dispositif d'extension (11), autour de ladite fréquence porteuse prédéterminée, afin de délivrer un deuxième signal Wi-Fi.

7. Système d'extension selon la revendication 6, dans lequel le dispositif d'extension (11) est configuré en outre pour:
obtenir à partir du point d'accès Wi-Fi (10), un signal de contrôle (c) du signal (s) destiné à être émis par ledit point d'accès Wi-Fi autour de ladite fréquence porteuse prédéterminée ; et
transmettre ledit signal de contrôle (c) audit dispositif répéteur (12).

8. Système d'extension selon l'une quelconque des revendications 6 ou 7, dans lequel:
le dispositif répéteur (12) comprend en outre des moyens de réception radio (125) d'un troisième signal Wi-Fi, autour d'une fréquence porteuse prédéterminée, et des moyens de transmission (121) dudit troisième signal reçu audit dispositif d'extension (11), via ladite connexion filaire (13) ;
le dispositif d'extension (11) comprend en outre des moyens de réception (112) dudit troisième signal émis par le dispositif répéteur via ladite connexion filaire (13) ; et
le module Wi-Fi (15) du point d'accès Wi-Fi (10) comprend des moyens pour sommer un quatrième signal Wi-Fi, reçu en provenance d'un terminal autour de ladite fréquence porteuse prédéterminée, et le troisième signal reçu en provenance du dispositif répéteur, afin de délivrer un signal à décoder par un circuit de codage/décodage Wi-Fi (101) du point d'accès Wi-Fi.

9. Système d'extension selon la revendication 8, dans lequel:
le troisième signal reçu en provenance du dispositif répéteur comprend une information représentative de l'utilisation d'au moins un canal de transmission ; et
ledit point d'accès Wi-Fi est configuré pour utiliser ladite information lors de la sélection d'un canal de transmission pour émettre un signal Wi-Fi.

10. Système d'extension selon l'une quelconque des revendications 6 à 9, dans lequel le dispositif d'extension obtient le signal analogique (s') :
- au niveau d'une liaison entre un composant de codage/décodage Wi-Fi (101) dudit module Wi-Fi dudit point d'accès Wi-Fi et d'un circuit intégré radiofréquence (102) ; ou
- lorsque le point d'accès Wi-Fi comprend au moins un module Front End (103) connecté à au moins une antenne (104) destinée à émettre le premier signal Wi-Fi, à partir du signal en entrée de chacune desdites au moins une antenne (104) ou de chacun desdits au moins un module Front End (103).

11. Système d'extension selon l'une quelconque des revendications 6 à 10, dans lequel le premier signal Wi-Fi émis par le point d'accès Wi-Fi et le deuxième signal Wi-Fi émis par le dispositif répéteur sont émis selon une technologie radio de type OFDM.

12. Système d'extension selon l'une quelconque des revendications 6 à 11, dans lequel le dispositif répéteur et/ou le dispositif d'extension comprend un module de décalage temporel pour décaler temporellement le deuxième signal Wi-Fi par rapport au premier signal Wi-Fi.

13. Procédé d'émission, par un dispositif répétiteur (12), d'un signal Wi-Fi d'un point d'accès Wi-Fi, le procédé comprenant les étapes suivantes :
obtention (E43), via une connexion filaire (13) connectée à un dispositif d'extension (11) d'un point d'accès Wi-Fi (10), d'un signal numérique (S') résultant de la conversion analogique-numérique d'un signal analogique (s') issu d'une division en puissance d'un signal (s) destiné à être émis par ledit point d'accès Wi-Fi autour d'une fréquence porteuse prédéterminée afin de délivrer un premier signal Wi-Fi ;
conversion (E44) du signal numérique (S') reçu via ladite connexion filaire en un signal analogique (s") ; et
émission (E45) du signal analogique (s") issu de la conversion du signal numérique (S") reçu autour de ladite fréquence porteuse prédéterminée, afin de délivrer un deuxième signal Wi-Fi.

14. Procédé d'émission selon la revendication 13, comprenant en outre la réception, en provenance du dispositif d'extension, d'un signal de contrôle (c) du signal (s) destiné à être émis par ledit point d'accès Wi-Fi, l'émission du signal analogique (s") prenant en compte ledit signal de contrôle (c).

15. Procédé d'émission selon l'une quelconque des revendications 13 ou 14, comprenant en outre l'émission (E40) du premier signal Wi-Fi par ledit point d'accès Wi-Fi, un décalage temporel étant ajouté entre le deuxième signal Wi-Fi et le premier signal Wi-Fi avant l'émission du signal analogique (s") issu de la conversion du signal numérique (S") reçu.

## Patentansprüche

1. Repeatervorrichtung (12) für ein WiFi-Signal, umfassend:
Empfangsmittel (121) zum Empfangen, über eine drahtgebundene Verbindung (13), die mit einer Erweiterungsvorrichtung (11) eines WiFi-Zugangspunkts (10) verbunden ist, eines digitalen Signals (S'), das aus der Analog-Digital-Umwandlung eines analogen Signals (s') resultiert, das aus einer Leistungsteilung eines Signals (s) hervorgegangen ist, das dazu bestimmt ist, von dem WiFi-Zugangspunkt um eine vorbestimmte Trägerfrequenz herum gesendet zu werden, um ein erstes WiFi-Signal auszugeben;
Digital-Analog-Umwandlungsmittel (122), die dazu ausgestaltet sind, das über die drahtgebundene Verbindung empfangene digitale Signal (S') in ein analoges Signal (s") umzuwandeln; und
Funkweiterübertragungsmittel (123, 124, 125), die dazu ausgestaltet sind, das analoge Signal (s"), das von den Digital-Analog-Umwandlungsmitteln (122) bereitgestellt wird, um die vorbestimmte Trägerfrequenz herum zu senden, um ein zweites WiFi-Signal auszugeben.

2. Repeatervorrichtung nach Anspruch 1, bei der:
die Empfangsmittel (121) dazu ausgestaltet sind, ferner, von der Erweiterungsvorrichtung, ein Steuersignal (c) des Signals zu empfangen, das dazu bestimmt ist, von dem WiFi-Zugangspunkt gesendet zu werden, das von der Erweiterungsvorrichtung bei dem WiFi-Zugangspunkt erhalten wird;
die Funkweiterübertragungsmittel (123, 124, 125) dazu ausgestaltet sind, das Steuersignal (c) zu berücksichtigen, um das analoge Signal (s") zu senden.

3. Repeatervorrichtung nach einem der Ansprüche 1 oder 2, umfassend ferner Funkempfangsmittel (125) zum Empfangen eines dritten WiFi-Signals und Übertragungsmittel (121) zum Übertragen des empfangenen dritten WiFi-Signals an die Erweiterungsvorrichtung (11) über die drahtgebundene Verbindung (13).

4. Repeatervorrichtung nach Anspruch 3, bei der das dritte WiFi-Signal eine Information umfasst, die für die Verwendung mindestens eines Übertragungskanals steht.

5. Repeatervorrichtung nach einem der Ansprüche 1 bis 4, bei welcher der WiFi-Zugangspunkt (10) eine Mehrzahl von Antennen umfasst, die dazu bestimmt sind, das Signal (s) um die vorbestimmte Trägerfrequenz herum zu senden, und die Funkweiterübertragungsmittel (123,124,125) eine Mehrzahl von Antennen umfassen, die dazu ausgestaltet sind, das analoge Signal (s") um die vorbestimmte Trägerfrequenz herum zu senden.

6. System zur Erweiterung der Abdeckung eines WiFi-Zugangspunkts (10), umfassend eine Erweiterungsvorrichtung (11) und mindestens eine Repeatervorrichtung (12) nach einem der Ansprüche 1 bis 5, wobei die Erweiterungsvorrichtung (11) umfasst:
Analog-Digital-Umwandlungsmittel (111), die dazu ausgestaltet sind, in ein digitales Signal (S') ein analoges Signal (s') umzuwandeln, das aus einer Leistungsteilung eines Signals (s) hervorgegangen ist, das von dem WiFi-Zugangspunkt um eine vorbestimmte Trägerfrequenz herum zu senden ist, um ein erstes WiFi-Signal auszugeben; und
Übertragungsmittel (112) zum Übertragen des digitalen Signals (S') an die mindestens eine Repeatervorrichtung (12) über eine drahtgebundene Verbindung (13),
wobei die mindestens eine Repeatervorrichtung (12) dazu ausgestaltet ist, ein analoges Signal (s"), das aus einer Digital-Analog-Umwandlung des digitalen Signals (S') resultiert, das von der Erweiterungsvorrichtung (11) empfangen wird, um die vorbestimmte Trägerfrequenz herum zu senden, um ein zweites WiFi-Signal auszugeben.

7. System zur Erweiterung nach Anspruch 6, bei dem die Erweiterungsvorrichtung (11) ferner dazu ausgestaltet ist:
ausgehend von dem WiFi-Zugangspunkt (10) ein Steuersignal (c) des Signals (s) zu erhalten, das dazu bestimmt ist, von dem WiFi-Zugangspunkt um die vorbestimmte Trägerfrequenz herum gesendet zu werden; und
das Steuersignal (c) an die Repeatervorrichtung (12) zu übertragen.

8. System zur Erweiterung nach einem der Ansprüche 6 oder 7, bei dem:
die Repeatervorrichtung (12) ferner Funkempfangsmittel (125) zum Empfangen eines dritten WiFi-Signals um eine vorbestimmte Trägerfrequenz herum und Übertragungsmittel (121) zum Übertragen des empfangenen dritten Signals an die Erweiterungsvorrichtung (11) über die drahtgebundene Verbindung (13) umfasst;
die Erweiterungsvorrichtung (11) ferner Empfangsmittel (112) zum Empfangen des von der Repeatervorrichtung über die drahtgebundene Verbindung (13) gesendeten dritten Signals umfasst; und
das WiFi-Modul (15) des WiFi-Zugangspunkts (10) Mittel umfasst, um ein viertes WiFi-Signal, das von einem Endgerät um die vorbestimmte Trägerfrequenz herum empfangen wird, und das von der Repeatervorrichtung empfangene dritte Signal zu summieren, um ein Signal auszugeben, das von einer WiFi-Codier/Decodier-Schaltung (101) des WiFi-Zugangspunkts zu decodieren ist.

9. System zur Erweiterung nach Anspruch 8, bei dem:
das von der Repeatervorrichtung empfangene dritte Signal eine Information umfasst, die für die Verwendung mindestens eines Übertragungskanals steht; und
der WiFi-Zugangspunkt dazu ausgestaltet ist, die Information bei der Auswahl eines Übertragungskanals zum Senden eines WiFi-Signals zu verwenden.

10. System zur Erweiterung nach einem der Ansprüche 6 bis 9, bei dem die Erweiterungsvorrichtung das analoge Signal (s') erhält:
- an einer Verbindung zwischen einer WiFi-Codier/Decodier-Komponente (101) des WiFi-Moduls des WiFi-Zugangspunkts und einer integrierten Hochfrequenzschaltung (102); oder
- wenn der WiFi-Zugangspunkt mindestens ein Front-End-Modul (103) umfasst, das mit mindestens einer Antenne (104) verbunden ist, die dazu bestimmt ist, das erste WiFi-Signal zu senden, ausgehend von dem Signal im Eingang jeder der mindestens einen Antenne (103) oder jedes des mindestens einen Front-End-Moduls (103).

11. System zur Erweiterung nach einem der Ansprüche 6 bis 10, bei dem das erste WiFi-Signal, das von dem WiFi-Zugangspunkt gesendet wird, und das zweite WiFi-Signal, das von der Repeatervorrichtung gesendet wird, nach einer Funktechnologie vom Typ OFDM gesendet werden.

12. System zur Erweiterung nach einem der Ansprüche 6 bis 11, bei dem die Repeatervorrichtung und/oder die Erweiterungsvorrichtung ein Zeitverschiebungsmodul umfasst, um das zweite WiFi-Signal in Bezug auf das erste WiFi-Signal zeitlich zu verschieben.

13. Verfahren zum Senden, durch eine Repeatervorrichtung (12), eines WiFi-Signals eines WiFi-Zugangspunkts, wobei das Verfahren die folgenden Schritte umfasst:
Erhalten (E43), über eine drahtgebundene Verbindung (13), die mit einer Erweiterungsvorrichtung (11) eines WiFi-Zugangspunkts (10) verbunden ist, eines digitalen Signals (S'), das aus der Analog-Digital-Umwandlung eines analogen Signals (s') resultiert, das aus einer Leistungsteilung eines Signals (s) hervorgegangen ist, das dazu bestimmt ist, von dem WiFi-Zugangspunkt um eine vorbestimmte Trägerfrequenz herum gesendet zu werden, um ein erstes WiFi-Signal auszugeben;
Umwandeln (E44) des über die drahtgebundene Verbindung empfangenen digitalen Signals (S') in ein analoges Signal (s"); und
Senden (E45) des analogen Signals (s"), das aus der Umwandlung des empfangenen digitalen Signals (S") hervorgegangen ist, um die vorbestimmte Trägerfrequenz herum, um ein zweites WiFi-Signal auszugeben.

14. Verfahren zum Senden nach Anspruch 13, umfassend ferner das Empfangen, von der Erweiterungsvorrichtung, eines Steuersignals (c) des Signals (s), das dazu bestimmt ist, von dem WiFi-Zugangspunkt gesendet zu werden, wobei das Senden des analogen Signals (s") das Steuersignal (c) berücksichtigt.

15. Verfahren zum Senden nach einem der Ansprüche 13 oder 14, umfassend ferner das Senden (E40) des ersten WiFi-Signals durch den WiFi-Zugangspunkt, wobei eine Zeitverschiebung zwischen dem zweiten WiFi-Signal und dem ersten WiFi-Signal vor dem Senden des analogen Signals (s"), das aus der Umwandlung des empfangenen digitalen Signals (S") hervorgegangen ist, hinzugefügt wird.

## Claims

1. Wi-Fi signal repeater device (12) comprising:
reception means (121) for receiving, via a wired connection (13) connected to an extender (11) of a Wi-Fi access point (10), a digital signal (S') resulting from analogue-to-digital conversion of an analogue signal (s') obtained by division of the power of a signal (s) intended to be transmitted by said Wi-Fi access point around a predetermined carrier frequency in order to deliver a first Wi-Fi signal;
digital-to-analogue conversion means (122) configured to convert the digital signal (S') received via said wired connection into an analogue signal (s"); and
radio retransmission means (123, 124, 125) configured to transmit the analogue signal (s") delivered by the digital-to-analogue conversion means (122) around said predetermined carrier frequency, in order to deliver a second Wi-Fi signal.

2. Repeater device according to Claim 1, wherein:
the reception means (121) are configured to further receive, from the extender, a control signal (c) for controlling the signal intended to be transmitted by said Wi-Fi access point, said signal being obtained by the extender from the Wi-Fi access point;
said radio retransmission means (123, 124, 125) being configured to take said control signal (c) into account to transmit the analogue signal (s").

3. Repeater device according to either one of Claims 1 and 2, further comprising radio reception means (125) for receiving a third Wi-Fi signal and transmission means (121) for transmitting said received third Wi-Fi signal to said extender (11), via said wired connection (13).

4. Repeater device according to Claim 3, wherein said third Wi-Fi signal contains information representative of use of at least one transmission channel.

5. Repeater device according to one of Claims 1 to 4, wherein the Wi-Fi access point (10) comprises a plurality of antennas intended to transmit the signal (s) around said predetermined carrier frequency and the radio retransmission means (123,124,125) comprise a plurality of antennas configured to transmit the analogue signal(s") around said predetermined carrier frequency.

6. Extension system for extending the coverage of a Wi-Fi access point (10), comprising an extender (11) and at least one repeater device (12) according to one of Claims 1 to 5, said extender (11) comprising:
analogue-to-digital conversion means (111) configured to convert, into a digital signal (S'), an analogue signal (s') obtained by division of the power of a signal (s) to be transmitted by said Wi-Fi access point around a predetermined carrier frequency in order to deliver a first Wi-Fi signal; and
transmission means (112) for transmitting said digital signal (S') to said at least one repeater device (12) via a wired connection (13),
said at least one repeater device (12) being configured to transmit an analogue signal (s"), resulting from a digital-to-analogue conversion of the digital signal (S') received from the extender (11), around said predetermined carrier frequency, in order to deliver a second Wi-Fi signal.

7. Extension system according to Claim 6, wherein the extender (11) is further configured to:
obtain, from the Wi-Fi access point (10), a control signal (c) for controlling the signal (s) intended to be transmitted by said Wi-Fi access point around said predetermined carrier frequency; and
transmit said control signal (c) to said repeater device (12) .

8. Extension system according to either one of Claims 6 and 7, wherein:
the repeater device (12) further comprises radio reception means (125) for receiving a third Wi-Fi signal, around a predetermined carrier frequency, and transmission means (121) for transmitting said received third signal to said extender (11), via said wired connection (13);
the extender (11) further comprises reception means (112) for receiving said third signal transmitted by the repeater device via said wired connection (13); and
the Wi-Fi module (15) of the Wi-Fi access point (10) comprises summation means for summing a fourth Wi-Fi signal, received from a terminal around said predetermined carrier frequency, and the third signal received from the repeater device, in order to deliver a signal to be decoded by a Wi-Fi encoding/decoding circuit (101) of the Wi-Fi access point.

9. Extension system according to Claim 8, wherein:
the third signal received from the repeater device contains information representative of use of at least one transmission channel; and
said Wi-Fi access point is configured to use said information when selecting a transmission channel to transmit a Wi-Fi signal.

10. Extension system according to any one of Claims 6 to 9, wherein the extender obtains the analogue signal (s'):
- via a link between a Wi-Fi encoding/decoding component (101) of said Wi-Fi module of said Wi-Fi access point and a radio-frequency integrated circuit (102); or
- when the Wi-Fi access point comprises at least one front-end module (103) connected to at least one antenna (104) intended to transmit the first Wi-Fi signal, from the input signal of each of said at least one antenna (104) or of each of said at least one front-end module (103) .

11. Extension system according to any one of Claims 6 to 10, wherein the first Wi-Fi signal transmitted by the Wi-Fi access point and the second Wi-Fi signal transmitted by the repeater device are transmitted in an OFDM radio technology.

12. Extension system according to any one of Claims 6 to 11, wherein the repeater device and/or the extender comprises a time-shift module for time shifting the second Wi-Fi signal with respect to the first Wi-Fi signal.

13. Transmission method for transmitting, by means of a repeater device (12), a Wi-Fi signal from a Wi-Fi access point, the method comprising the following steps:
obtaining (E43), via a wired connection (13) connected to an extender (11) of a Wi-Fi access point (10), a digital signal (S') resulting from analogue-to-digital conversion of an analogue signal (s') obtained by division of the power of a signal (s) intended to be transmitted by said Wi-Fi access point around a predetermined carrier frequency in order to deliver a first Wi-Fi signal;
converting (E44) the digital signal (S') received via said wired connection into an analogue signal (s"); and transmitting (E45) the analogue signal (s") obtained by converting the digital signal (S") received around said predetermined carrier frequency, in order to deliver a second Wi-Fi signal.

14. Transmission method according to Claim 13, further comprising receiving, from the extender, a control signal (c) for controlling the signal (s) intended to be transmitted by said Wi-Fi access point, transmission of the analogue signal (s") taking said control signal (c) into account.

15. Transmission method according to either one of Claims 13 and 14, further comprising transmitting (E40) the first Wi-Fi signal by means of said Wi-Fi access point, a time shift being added between the second Wi-Fi signal and the first Wi-Fi signal before the analogue signal (s") obtained by converting the received digital signal (S") is transmitted.
